# EUROPEAN PATENT SPECIFICATION

(11) **EP 0 581 820 B1**
(45) Date of publication and mention of the grant of the patent: **18.06.1997**
(21) Application number: 92909022.3
(22) Date of filing: 24.04.1992
(51) Int. Cl.: F16L 9/12

(54) **METHOD OF MANUFACTURE OF A STRUCTURALLY COMPOSITE METAL AND PLASTICS TUBE**
VERFAHREN ZUR HERSTELLUNG EINES ROHRES AUS METALL- UND KUNSTSTOFFVERBUNDWERKSTOFF
PROCEDE DE FABRICATION D'UN TUBE A STRUCTURE COMPOSITE METAL-PLASTIQUE

(30) Priority: 26.04.1991 GB 9109087
(43) Date of publication of application: 09.02.1994
(73) Proprietor: GLYNWED PIPE SYSTEMS LIMITED, Sheldon, Birmingham B26 3AZ (GB)
(72) Inventor: BARFIELD, Malcolm Raymond, New Invention, Willenhall WV12 5FH (GB); MOORE, Robert Barrie, Lichfield WS13 7RB (GB)
(74) Representative: Stonehouse, Sidney William
(86) International application number: GB9200767
(87) International publication number: WO9219904

(56) References cited:
- EP-A- 53 590
- EP-A- 0 253 604
- FR-A- 1 353 839
- US-A- 1 718 983

## Description

This invention relates to a tube for conveying fluids and of the kind having a tubular metal core covered internally and externally by inner and outer layers of plastics material, and also to a method of manufacturing such a tube.

In known tubes of the kind set forth, the metal provides the strength and stiffness of the tube and the plastics material protects the metal against both internal and external environmental corrosive, chemical or erosion effects. Essentially these are metal tubes protected internally and externally by plastics coatings.

It is known to manufacture tubes of the kind set forth by forming the tubular metal core of imperforate sheet material and providing the inner and outer layers of plastics material as extrusions inside and outside the metal core. A difficulty with this method is to interconnect the metal and plastics materials positively together, which is generally desirable for the composite tube to be most effective in use. One way of dealing with the difficulty which has been proposed has been to apply a coating of a graft polyethylene to the metal core and then to extrude a plastics layer on to that bonding coating. The coating is also applied as an extrusion, the coating and plastics layer being extruded onto the metal core from separate extrusion outlets of a common extrusion die. In another known method a perforate tubular metal core is used which is coated internally and externally by layers of plastics material which are connected together through the perforations in the metal and are so retained to the metal.

EP-A-0053590 discloses such a method of manufacturing a composite tube from metal and plastics materials for conveying fluids, comprising the provision of inner and outer layers of plastics material on an elongate tubular metal core. The inner layer is pre-formed as an extrusion of plastics material. A strip of metal having longitudinally and laterally spaced openings which occupy at least 5% of the total surface area of the strip is wound onto the inner layer to form the elongate tubular core, edges of the strip being secured together to retain the tubular shape of the core. The inner layer and core assembly is then fed to an extrusion die in which the outer layer of plastics material is extruded onto the core to cover the external surface of the core and thereby cause the inner and outer layers to be integrally joined together through the openings in the metal strip of the core.

According to this document, the thicknesses of the inner and outer plastics layers and the thickness of the strip are suitably chosen so as to ensure a required permanent cold deformability.

The present invention consists in a method of manufacturing a composite tube from metal and plastics materials for conveying fluids, comprising the steps of feeding to a forming unit a strip of metal sheet having longitudinally and laterally spaced openings throughout its length occupying at least 5% of the total surface area of the sheet, forming the strip into an elongate tubular core at the forming unit and securing edges of the strip together to retain the tubular form, combining an inner layer of the plastics material with the core and extruding onto the core at an extrusion die an outer layer of plastics material to cover the external surface of the core and thereby cause the inner and outer layers to be integrally joined together through the openings in the metal strip of the core, the method being continuous for the composite tube to be of indefinite length, the strip used being expanded and flattened metal sheet mesh, the formed core being heated before feeding to the extrusion die, the inner layer of plastics material being pre-formed as a lining for the core or formed by extrusion of the plastics material inside the core, and the inner and outer layers being formed for each to have a thickness of at least 0.1mm and for their combined thicknesses to be substantially equal to or greater than the thickness of the metal sheet mesh.

In the composite tube the metal sheet mesh and plastics materials function together to provide the tube with strength to resist internal and external pressures exerted by fluids conveyed by the tube in use through a range of operating temperatures and, when required, with a heat exchange capacity between inner and outer surfaces of the tube.

The composite tube made by the method in accordance with the invention may be used for domestic and other purposes for conveying liquids and gases. It may be used as a pressure pipe and may be used in heating systems, providing heat exchange between its surfaces. For heat exchange purposes the metal sheet mesh and plastics materials are selected for their thermal conductivity properties, and the thicknesses of the inner and outer layers relative to the thickness of the metal material of the tubular core may be significantly less than they might be for the tube when it is intended for other purposes, as for example in pressurised fluid systems.

At least for heat exchange applications of the composite tube it is generally desirable for the inner and outer layers of the plastics material to be of similar thicknesses so that the metal core is centrally disposed in the composite wall of the formed tube. However, for some intended applications of the tube, including use in fluid distribution systems, it may be preferable for the plastics layers to be of dissimilar thicknesses.

After the inner and outer layers have been applied to the tubular core the composite tube so formed may be pre-compressively stressed for use, for example for use as a gas service pipe, by swaging it down to a reduced cross-sectional size. In that form the tube may have a thinner wall thickness than a comparable tube made entirely from plastics material for serving a similar purpose, and/or it may be able to be subjected to higher internal fluid pressures than a comparable plastics pipe. The swaged-down tube is able to retain the reduced cross-sectional size more reliably than is usual when a tube made entirely of plastics material such as polyethylene is swaged down.

The plastics layers protect the metal core from corrosion as well as contributing to the strength and heat transfer properties of the tube.

At least one of the plastics layers, generally the inner layer, may be formed to present an uneven, undulated or roughened surface. This can assist in the transfer of heat to the tube from fluid in or in contact with the tube in use. The uneveness, undulations or roughening may be derived from the form of the surface or surfaces of the metal core covered by the plastics material. Either one or each of the plastics layers may alternatively present a smooth, even surface of the tube.

By the integral joining of the inner and outer plastics layers through the openings of the metal core a positive interconnection of the plastics layers to the core is obtained which prevents, or at least substantially retards, separation of the layers from the core. The secure interconnection is retained even when the tube is swaged down to be pre-compressively stressed for use.

Various factors may be relevant to the extent, size and shape of the openings provided in the metal mesh strip of which the tubular core is formed. For example, the selection may be dependent upon the metal and plastics materials being used, the desired operating requirements of the tube and/or the relevant thicknesses of the tubular core and inner and outer plastics layers. In general they will occupy 15%-30% of the surface area. The openings may be of various shapes. Typically the openings will be of circular, oval, square, rectangular or diamond shapes but they may be of other regular or irregular shapes. Typical minimum and maximum dimensions for the openings are 0.5 mm and 3.0 mm respectively, with 0.75mm and 1.5mm the most usual dimensions for domestic use of the tube. Other dimensions are possible. For some applications of the tube the openings may be of appreciably larger dimensions.

The metal mesh of the strip may be the expanded and flattened metal sheet mesh known as EXPAMET. The metal may be mild or stainless steel or aluminium, for example, but other metals and alloys may be used depending upon the quality and characteristics required of the tube.

Forming of the metal mesh strip into the tubular core at the forming unit may be done in various ways. For example, the strip may be rolled over lengthwise into a tube. The strip might be formed initially into a generally U-shaped section and then have the limbs of the U turned over to complete the tubular shape. A preferred manner of producing the core is to wind the strip helically into the tubular form. The winding may be done on a mandrel, for example, or, if the inner layer is pre-formed, it may be done directly onto the inner layer. Adjoining edges of the lamina in the formed tubular core may be welded together either in overlapping or butting relationship. They may be mechanically interlocked instead, for example by overlapping and folding the edges.

The plastics material for the inner and outer layers may be selected according to the intended use or characteristics of the tube. Generally plastics material having good chemical resistance and temperature performance will be suitable for most uses. Typical materials for heat exchange applications of the tube are perfluoroalkoxyethylene, fluorinated ethylene propylene, polyethylene, cross-linked polyethylene, polypropylene, polytetrafluorethylene, chlorinated polyvinyl chloride and polyvinylidene difluoride. Others may be used. For distribution of potable water and high pressure gas, polyethylene is suitable, and for district heating systems cross-linked polyethylene may be used.

For heat exchange applications of the tube in domestic usages the minimum thickness of 0,lmm for both the inner and outer layers of the plastics material is workable but for fluid distribution purposes, for example of water or gas, it is generally desirable for the layers to have a thickness of at least 1.0mm. In respect of the latter typically the inner layer has a thickness of 1.0mm and the outer layer has a thickness of 3.0 to 15mm, depending upon the external cross-sectional dimension of the tube.

When the inner layer of the plastics material is provided as a pre-formed liner it is desirable for the tubular core to be a close fit about that layer when the two are subsequently assembled together. The liner is conveniently formed as an extrusion but it may possibly be formed as a moulding or in some other suitable manner.

When the inner layer is provided inside the tubular core by extrusion, it may be extruded by means of an extrusion die positioned to extrude the plastics material straight into the inside of the core, or the plastics material may be applied externally of the core and penetrate through the openings of the core to the interior of the core to form the inner layer. A mandrel, die or other suitable former may be located inside the tubular core which serves to collect and spread the plastics material on to the inside of the tubular core as the plastics material penetrates through the openings. By applying the plastics material for the inner layer from outside the tubular core, the inner and outer layers can be extruded into the tubular core simultaneously from just one extrusion die.

An embodiment of the invention will now be described by way of example with reference to the accompanying drawings in which :
Figure 1 is a schematic view of a typical production line for manufacturing a tube in accordance with the present invention, in which metal strip is helically wound to form a tubular core of the tube;
Figure 2 is a simplified perspective view of apparatus used in the production line for helically winding and welding the metal strip and extruding inner and outer layers of plastics material onto the formed tubular core;
Figure 3 and 4 are sections on lines 3-3 and 4-4 respectively of Figure 2;
Figure 5 is an enlarged fragmentary schematic section through a cross-head extruder of the apparatus in Figure 2;
Figure 6 is a simplified perspective view of alternative apparatus which may be used for bending and welding the metal strip to form the tubular core;
Figure 7 is a simplified perspective view of apparatus used for helically winding and welding the metal strip about an inner layer of plastics material provided as a pre-formed lining and extruding an outer layer of plastics material onto the formed tubular core;
Fiqures 8, 9 and 10 are sections on lines 8-8, 9-9 and 10-10 respectively of Figure 7; and
Figure 11 is a fragmentary section showing another form of joint between edges of the metal strip in the formed tubular core.

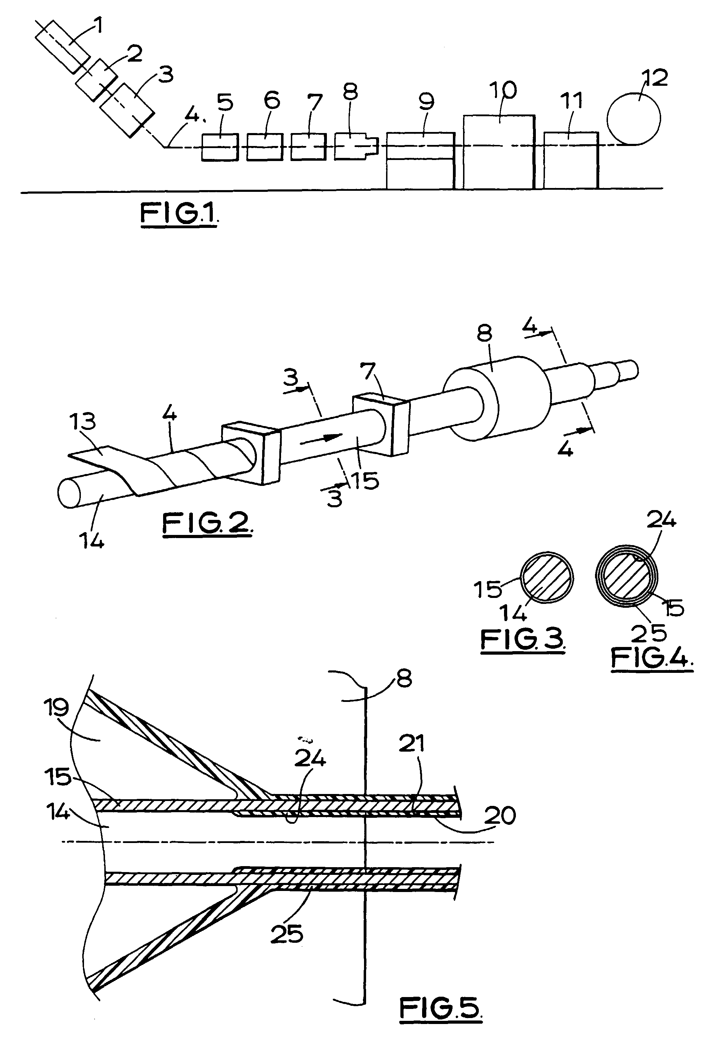

The production line shown in Figure 1 of the drawings is or the continuous manufacture of a tube of indefinite length which has a tubular core of helically wound and welded expanded and flattened metal sheet mesh and inner and outer layers of plastics material applied to the inside and outside of the tubular core. The mesh is supplied to the line in coiled strip form.

By the interstices of the metal mesh regularly circumferentially and longitudinally spaced openings are present in the tubular core throughout its length The openings provide an open area of 15-20% in the total surface area of the core.

As shown in Figure 1, the production line includes, in succession from the beginning of the line, a metal strip uncoiler 1, a strip welding unit 2, an accumulator 3, a helical winding unit 4, a weld head 5, a scarfing unit 6, a sizing unit 7, an extruder cross-head 8, sizing calibrator and spray bath 9, a haul-off unit 10, a sawing station 11 and a tube coiler 12.

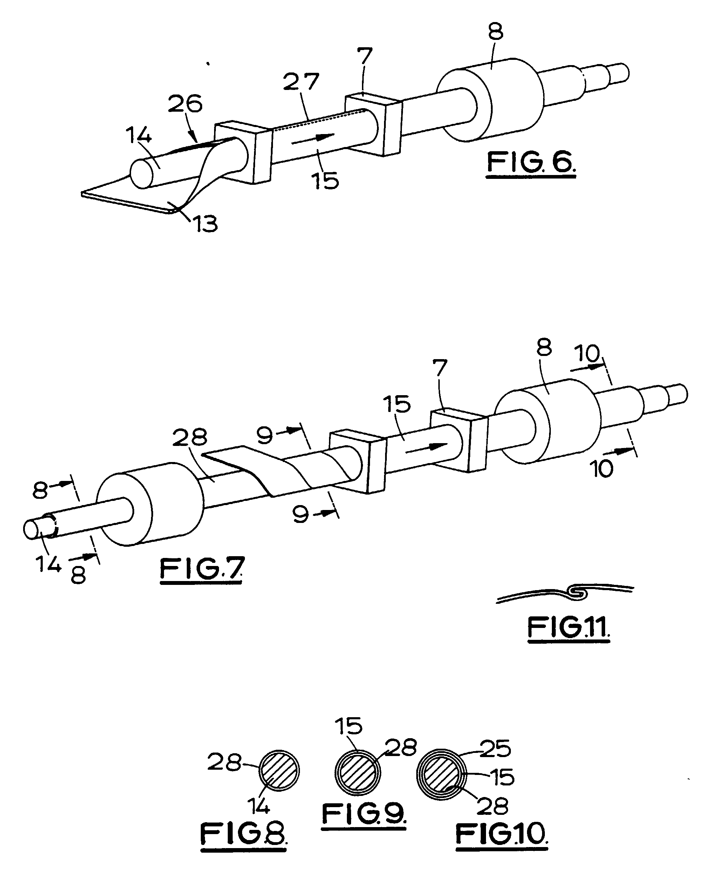

The coiled mesh strip supplied to the production line is uncoiled at the uncoiler 1 before passing to the welding unit 2 where successive strips are welded end-to-end for continuous production. From the welding unit 2 the strip progresses to the accumulator 3 where it is gathered until it proceeds to the helical winding unit 4. At the winding unit 4 the mesh strip 13, Figure 2, is wound helically around a mandrel 14 to form a tubular core 15, Figure 3. The mandrel 14 is selected to provide a desired internal diameter for the formed tubular core, and can be replaced to provide other internal diameters, if required. Adjacent edges of the helically wound strip 13 overlap and are welded together at the weld head 5 to secure the tubular form of the core 15. The welded tubular core then passes to the scarfing unit 6 where it is prepared for feeding into the sizing unit 7 at which variations in the diameter of the core from the required size are corrected. The tubular core is also heated to avoid subsequent thermal shock conditions when it passes through the extruder cross-head 8. At the extruder cross-head 8 the tubular core, still on the mandrel 14, extends through a die 19 by which plastics material is extruded onto the exterior of the tubular core. That portion of the mandrel which extends through the die 19 is reduced in diameter, as at 20, by the extent of the required thickness of the inner layer of plastics material of the formed composite tube. An annular space 21 is thus defined between the reduced diameter portion 20 of the mandrel and the tubular core 15 at the die 19. Some of the extruded plastics material is forced by the extruding pressure to pass through the interstices of the mesh of the tubular core to fill that annular space 21, and so forms the inner layer (shown at 24 in Figure 4) of the plastics material of thetube against the inside of the tubular core. The rest of the extruded plastics material forms the outer layer of the material (shown at 25 in Figure 4) around the outside of the tubular core, and is integrally joined to the inner layer 24 through the interstices of the mesh.

From the extruder cross-head 8 the formed tube passes through the sizing calibrator and spray bath 9, being drawn from there by the haul-off unit 10 and leaving the mandrel 14 before running on to the sawing station 11, where the tube is cut to required, selectable, lengths or being collected on the tube coiler 12.

The tube so formed is suitable for conveying various fluids and is a substantially rigid structural composite of the metal and plastics materials which function together to provide the tube with the strength required to resist the fluid pressures to which it may be subjected whilst it is in use. The tube may be used for conveying fluids in a range of operating temperatures. Its structure enables appreciable heat exchange between its inner and outer surfaces.

Another manner of forming the tubular metal core which may be employed is shown in Figure 6. Again expanded and flattened metal mesh strip is used. Instead of the helical winding unit 4 there is a forming unit 26 which bends the strip 13 longitudinally about the mandrel 14 to form the tubular core 15. The edges of the bent strip overlap and are welded together at the weld head 5 so that the formed tubular core 15 has a straight longitudinally extending welding joint 27.

A further modification is shown in Figures 7 to 10 of the accompanying drawings. Here the inner layer of the tube produced is provided by a pre-formed plastics liner 28, Figure 7. As before, expanded and flattened metal mesh strip 13 is used to form the tubular core 15 which is produced by helically winding the strip and welding overlapping edges of the wound strip together. The plastics liner 28 is extruded from a conventional extrusion head into a tube of the desired thickness of the inner layer of the formed tube. The liner 28 extends over the mandrel 14, which is of correspondingly smaller diameter than that used in the embodiment first described above, and the strip 13 is wound round the liner on the mandrel to form the tubular core, Figure 7, on the liner, Figure 9. From the welding head, the liner 28 and tubular core 15 assembly is heated, passed through a sizing unit 7 and then continues on to an extruder cross-head 8 where they extend through an extrusion die. Plastics material the same as or compatible with that of the liner 28 is extruded from the die onto the exterior of the tubular core to form the outer layer of the formed tube, Figure 10. Under the extrusion pressure plastics material of the extruded outer layer penetrates through the interstices of the mesh strip of the tubular core, and under the pressure and heat becomes integrally joined to the liner 28, thereby bonding the inner and outer layers of the plastics material together and keying them to the tubular core.

Instead of overlapping and welding the edges of the strip 13 in the forming of the tubular core 15, as described, the edges may be butted and welded, or, as shown in Figure 11, they may be overlapped and folded so as to interlock them together mechanically. Care has to be taken with this arrangement to ensure that there is proper coverage of the metal core by the inner and outer plastics layers at the interlocked edges of the strip.

The tube made by the method, or by the method including any of the modifications, described may be used as a pressure pipe in numerous applications through a range of operating temperatures.

For heat exchange application the core of the tube may be made of steel or aluminium flattened mesh. Polyvinylidene difluoride is a suitable plastics material for the inner and outer layers, but other plastics may be used including: polyethylene, cross-linked polyethylene, polypropylene, polyfluoroalkoxyethylene, fluorinated ethylene propylene and chlorinated polyvinyl chloride. The tube will generally be made in sizes ranging from 16mm-63mm (about 40mm most usually) outside diameter with the metal thickness 0.4mm and the plastics thickness in each of the inner and outer layers being 0.2mm. Such a tube may operate typically under a pressure of 15 bar continuous at temperatures from -40% to 150°C continuous with possible excursions to as high as 180°C.

Tests have shown that a 38mm inside diameter tube having a steel expanded and flattened sheet mesh core and plastics inner outer layers of polyvinylidene difluoride will transfer heat through its wall at about 80% of that transferred through a tube of the same diameter made solely of new clean steel. However whilst the heat transferred through the wall of the all-steel tube rapidly deteriorated to 40% of the initial value due to corrosion and fouling of the metal, the tube made in accordance with the present invention as a structural composite of the steel mesh and plastics inner and outer layers maintained substantially the same heat transfer level. A typical heat transfer rate for the 38mm internal diameter tube with a total wall thickness of 1.83mm and internal and external layers of plastics each of 0.3mm thickness, has been calculated to be 82W/m²°C.

For a water distribution application the core of the tube is preferably made of steel expanded and flattened sheet mesh. For potable water distribution polyethylene is conveniently used for the inner and outer plastics layers of the tube, and for district heating cross-linked polyethylene is appropriate for those layers. The tube will generally be made in sizes in the range 90mm-400mm outside diameter for potable water and 63mm-200mm outside diameter for district heating with a typical inner layer thickness of 1mm and outer layer thickness of 3mm-15mm, depending upon the outside diameter of the formed tube. Typically the tube may operate under a pressure of 16 bar continuous at a temperature of 20°C when distributing potable water, and under a pressure of 15 bar continuous at a temperature of 135°C when distributing for district heating.

When the tube is to be used for distribution of high pressure gas, for example, the core of the tube is again preferably made of steel expanded and flattened sheet mesh and the inner and outer plastics layers are preferably made of polyethylene. The tube may be in sizes ranging typically from 63mm to 250mm outside diameter. If the tube is to be swaged down so as to be pre-compressively stressed for use it may be made initially in sizes ranging typically from 110mm-500mm outside diameter before being swaged down to the desired finished size. Typically the tube may operate under a pressure of 25 bar continuous at a temperature of 40°C.

## Claims

1. A method of manufacturing a composite tube from metal and plastics material for conveying fluids, comprising the steps of feeding to a forming unit (4;26) a strip (13) of metal sheet having longitudinally and laterally spaced openings throughout its length occupying at least 5% of the total surface area of the sheet, forming the strip (13) into an elongate tubular core (15) at the forming unit and securing edges of the strip together to retain the tubular form, combining an inner layer (24;28) of the plastics material with the core and extruding onto the core at an extrusion die (19) an outer layer (25) of the plastics material to cover the external surface of the core and thereby cause the inner and outer layers to be integrally joined together through the openings in the metal strip of the core, the method being continuous for the composite tube to be of indefinite length, the strip (13) used being expanded and flattened metal sheet mesh, the formed core (15) being heated before feeding to the extrusion die (19), the inner layer (24;28) of plastics material being pre-formed as a lining for the core or formed by extrusion of the plastics material inside the core, and the inner and outer layers being formed for each to have a thickness of at least 0.1mm and for their combined thicknesses to be substantially equal to or greater than the thickness of the metal sheet mesh.

2. A method according to Claim 1 characterised in that the edges of the strip (13) are secured together in overlapping relationship with welding in the formed tubular core (15).

3. A method according to Claim 1 characterised in that the edges of the strip (13) are butted and welded together in the formed tubular core (15).

4. A method according to Claim 1 characterised in that the edges of the strip (13) are overlapped and folded to interlock them together mechanically in the formed tubular core (15).

5. A method according to any of Claims 1 to 4 characterised in that the strip (13) is helically wound at the forming unit (4) to form the tubular core (15).

6. A method according to any of Claims 1 to 4 characterised in that the strip (13) is bent longitudinally at the forming unit (26) and opposed edges are brought together and secured to form the tubular core (15).

7. A method according to any preceding claim characterised in that the plastics material is extruded onto the exterior of the tubular core (15) at the extrusion die (19) and penetrates through the openings of the metal sheet mesh of the tubular core (15) so that some of the material forms the inner layer (24) on the inside of the tubular core, some of the material forms the outer layer (25) on the outside of the tubular core and the two layers are integrally joined together by portions of the material extending through the openings.

8. A method according to Claim 7 characterised in that a former (14) is located inside the tubular core (15) during the extrusion of the plastics material and an annular space (21) is defined between the former (14) and the internal surface of the tubular core into which the plastics material which penetrates through the openings is received to define the inner layer (24).

9. A method according to any preceding claim characterised in that the composite tube is swaged down to a reduced cross-sectional size after the inner and outer layers (24, 28; 25) have been applied to the tubular core (15).

10. A method according to any preceding claim characterised in that at least one of the inner and outer layers (24, 28; 25) is formed to present an uneven, undulated or roughened surface.

11. A method according to Claim 10 characterised in that the uneveness, undulating or roughening of the said surface is derived from the form of the adjacent surface of the tubular core (15) covered by the respective layer (24, 28; 25).

12. A method according to any preceding claim characterised in that the openings of the metal sheet mesh of the strip (13) occupy 15% - 30% of the total surface area of the formed tubular core (15).

13. A method according to any preceding claim characterised in that the openings of the metal sheet mesh of the strip (13) each have in cross-sectional shape a dimension of not less than 0.5mm and not more than 3.0mm.

14. A method according to any preceding claim characterised in that the plastics material of the inner and outer layers (24, 28; 25) is polyethylene, cross-linked polyethylene, polypropylene, polytetrafluorethylene, chlorinated polyvinyl chloride, perfluroalkoxyethylene, fluorinated ethylene propylene or polyvinylidene difluoride.

## Patentansprüche

1. Verfahren zum Herstellen eines Verbundstoffrohrs aus Metall und Kunststoffmaterial zum Fördern von Fluiden, aufweisend die Schritte: Zuführen eines Streifens (13) aus Metallblech mit in Längssrichtung und zur Seite hin beabstandeten Öffnungen über seine gesamte Länge, die wenigstens 5% der Gesamtoberfläche des Blechs einnehmen, zu einer Formgebungseinheit (4; 26), Bilden des Streifens (13) in einen länglichen rohrförmigen Kern (15) in der Formgebungseinheit und Festlegen der Kanten des Streifens aneinander, um die Rohrform beizubehalten, Verbinden einer Innenschicht (24; 28) des Kunststoffmaterials mit dem Kern und Extrudieren einer Außenschicht (25) aus Kunststoffmaterial auf den Kern an einer Strangpreßform (19) zum Abdecken der Außenfläche des Kerns, und um dadurch die Innen- und Außenschichten zu veranlassen, durch die Öffnungen in dem Metallstreifen des Kerns integral miteinander verbunden zu werden, wobei das Verfahren kontinuierlich abläuft, damit das Verbundstoffrohr eine unbegrenzte Länge hat, wobei der verwendete Streifen (13) ein ausgeweitetes und flachgedrücktes Metallblechgitter ist, wobei der geformte Kern (15) vor dem Zuführen zu der Strangpreßform (19) erwärmt wird, wobei die Innenschicht (24, 28) aus Kunststoffmaterial als Futterrohr für den Kern vorgeformt oder durch Strangpressen des Kunststoffmaterials in dem Kern gebildet wird, und wobei die Innen- und Außenschichten jeweils so geformt werden, daß sie eine Dicke von wenigstens 0,1 mm aufweisen, und daß ihre kombinierten Dicken im wesentlichen gleich oder größer als die Dicke des Metallblechgitters ist.

2. Verfahren nach Anspruch 1, dadurch gekennzeichnet, daß die Ränder des Streifens (13) in dem geformten rohrförmigen Kern (15) in überlappender Beziehung unter Schweißen aneinander festgelegt werden.

3. Verfahren nach Anspruch 1, dadurch gekennzeichnet, daß die Ränder des Streifens (13) in dem gebildeten rohrförmigen Kern (15) auf Stoß gebracht und miteinander verschweißt werden.

4. Verfahren nach Anspruch 1, dadurch gekennzeichnet, daß die Ränder des Streifens (13) in dem gebildeten rohrförmigen Kern (15) überlappt und gefaltet werden, um sie mechanisch miteinander zu verblocken.

5. Verfahren nach einem der Ansprüche 1 bis 4, dadurch gekennzeichnet, daß der Streifen (13) in der Formgebungseinheit (4) spiralförmig gewickeit wird, um den rohrförmigen Kern (15) zu bilden.

6. Verfahren nach einem der Ansprüche 1 bis 4, dadurch gekennzeichnet, daß der Streifen (13) in Längsrichtung in der Formgebungseinheit (26) gebogen wird, und gegenüberliegende Ränder zusammengebracht und festgelegt werden, um den rohrförmigen Kern (15) zu bilden.

7. Verfahren nach einem der vorangehenden Ansprüche, dadurch gekennzeichnet, daß das Kunststoffmaterial auf das Äußere des rohrförmigen Kerns (15) an der Strangpreßform (19) extrudiert wird und durch die Öffnungen des Metallblechgitters des rohrförmigen Kerns (15) so dringt, daß ein Teil des Materials die Innenschicht (24) auf der Innenseite des rohrförmigen Kerns bildet, ein Teil des Materials die Außenschicht (25) auf der Außenseite des rohrförmigen Kerns bildet und die zwei Schichten durch Teile des Materials, die sich durch die Offnungen hindurcherstrecken, integral verbunden werden.

8. Verfahren nach Anspruch 7, dadurch gekennzeichnet, daß eine Formgabeeinrichtung (14) in dem rohrförmigen Kern (15) während des Extrudierens des Kunststoffmaterials angeordnet ist und ein ringförmiger Raum (21) zwischen der Formgabeeinrichtung (14) und der Innenseite des rohrförmigen Kerns festgelegt ist, in dem das Kunststoffmaterial, das durch die Öffnungen dringt, aufgenommen wird, um die Innenschicht (24) zu bilden.

9. Verfahren nach einem der vorangehenden Ansprüche, dadurch gekennzeichnet, daß das Verbundstoffrohr auf eine verringerte Querschnittsabmessung gestaucht wird, nachdem die Innen- und Außenschichten (24, 28; 25) auf den rohrförmigen Kern (15) aufgetragen wurden.

10. Verfahren nach einem der vorangehenden Ansprüche, dadurch gekennzeichnet, daß wenigstens entweder die Innenschicht oder die Außenschicht (24, 28; 25) so gebildet ist, daß sie eine unebene, gewählte oder aufgerauhte Oberfläche bildet.

11. Verfahren nach Anspruch 10, dadurch gekennzeichnet, daß die Unebenheit, Wellung oder Rauhheit der Oberfläche von der Form der benachbarten Oberfläche des rohrförmigen Kerns (15) abgeleitet wird, die durch die jeweilige Schicht (24, 28; 25) abgedeckt ist.

12. Verfahren nach einem der vorangehenden Ansprüche, dadurch gekennzeichnet, daß die Öffnungen des Metallblechgitters des Streifens (13) 15% bis 30% der gesamten Oberfläche des gebildeten rohrförmigen Kerns (15) einnehmen.

13. Verfahren nach einem der vorangehenden Ansprüche, dadurch gekennzeichnet, daß die Öffnungen des Metallblechgitters des Streifens (13) jeweils eine Querschnittsform mit einer Größe von nicht weniger als 0,5 mm und nicht mehr als 3,0 mm aufweisen.

14. Verfahren nach einem der vorangehenden Ansprüche, dadurch gekennzeichnet, daß das Kunststoffmaterial der Innen- und Außenschichten (24, 28; 25) Polyethylen, vernetztes Polyethylen, Polypropylen, Polytetrafluorethylen, chloriertes Polyvinylchlorid, Pertluoräkoxyethylen, fluoriertes Ethylenpropylen oder Polyvinylidendifluorid ist.

## Revendications

1. Procédé de fabrication d'un tube composite à partir de métal et de matière plastique pour transporter des fluides, comprenant les étapes d'introduction dans une unité de façonnage (4; 26) d'un ruban (13) de feuille métallique ayant des ouvertures espacées dans les sens longitudinal et latéral sur toute sa longueur, occupant au moins 5% de la surface totale de la feuille, de façonnage du ruban (13) en un noyau tubulaire allongé (15) à l'unité de façonnage et de fixation des bords du ruban l'un à l'autre pour conserver la forme tubulaire, de combinaison d'une couche interne (24; 28) de la matière plastique avec le noyau et d'extrusion sur le noyau à une filière d'extrusion (19) d'une couche externe (25) de la matière plastique pour recouvrir la surface externe du noyau et ainsi causer l'assemblage complet des couches interne et externe à travers les ouvertures du ruban métallique du noyau, le procédé étant réalisé en continu pour que le tube composite soit de longueur indéfinie, le ruban (13) utilisé étant une maille en feuille métallique dilatée et aplatie, le noyau formé (15) étant chauffé avant d'être introduit à l'endroit de la matrice d'extrusion (19), la couche interne (24; 28) de matière plastique étant pré-formée en revêtement pour le noyau ou formée par extrusion de la matière plastique à l'intérieur du noyau, et les couches interne et externe étant formées pour que chacune ait une épaisseur d'au moins 0,1 mm et pour que leur épaisseur combinée soit sensiblement égale ou supérieure à l'épaisseur de la maille en feuille métallique.

2. Procédé selon la revendication 1, caractérisé en ce que les bords du ruban (13) sont fixés l'un à l'autre dans une relation de chevauchement avec soudage dans le noyau tubulaire formé (15).

3. Procédé selon la revendication 1, caractérisé en ce qu'on met bout à bout les bords du ruban (13) et en ce qu'on les soude ensemble dans le noyau tubulaire formé (15).

4. Procédé selon la revendication 1, caractérisé en ce qu'on fait se chevaucher les bords du ruban (13) et en ce qu'on les replie pour qu'ils s'imbriquent de façon mécanique dans le noyau tubulaire formé (15).

5. Procédé selon l'une quelconque des revendications 1 à 4, caractérisé en ce qu'on enroule le ruban (13) de façon hélicoïdale à l'unité de façonnage (4) pour former le noyau tubulaire (15).

6. Procédé selon l'une quelconque des revendications 1 à 4, caractérisé en ce qu'on courbe le ruban (13) dans le sens longitudinal à l'unité de façonnage (26) et en ce qu'on rassemble les bords opposés et en ce qu'on les fixe pour former le noyau tubulaire (15).

7. Procédé selon l'une quelconque des revendications précédentes, caractérisé en ce qu'on extrude la matière plastique sur l'extérieur du noyau tubulaire (15) à la filière d'extrusion (19) et en ce qu'elle pénètre à travers les ouvertures de la maille en feuille métallique du noyau tubulaire (15) de manière qu'une partie de la matière forme la couche interne (24) à l'intérieur du noyau tubulaire, qu'une partie de la matière forme la couche externe (25) à l'extérieur du noyau tubulaire, et en ce qu'on réunit complètement les deux couches par des parties de la matière s'étendant à travers les ouvertures.

8. Procédé selon la revendication 7, caractérisé en ce qu'un gabarit (14) est situé à l'intérieur du noyau tubulaire (15) au cours de l'extrusion de la matière plastique et en ce qu'un espace annulaire (21) est défini entre le gabarit (14) et la surface interne du noyau tubulaire, dans lequel est reçue la matière plastique qui pénètre à travers les ouvertures pour définir la couche interne (24).

9. Procédé selon l'une quelconque des revendications précédentes, caractérisé en ce qu'on réduit par emboutissage le tube composite jusqu'à une taille de section plus faible après que les couches interne et externe (24, 28; 25) aient été appliquées au noyau tubulaire (15).

10. Procédé selon l'une quelconque des revendications précédentes, caractérisé en ce qu'au moins une des couches interne et externe (24, 28; 25) est façonnée pour présenter une surface inégale, ondulée ou rendue rugueuse.

11. Procédé selon la revendication 10, caractérisé en ce que le caractère inégal, ondulé ou rugueux de ladite surface est obtenu à partir de la forme de la surface adjacente du noyau tubulaire (15) recouverte par la couche respective (24, 28; 25).

12. Procédé selon l'une quelconque des revendications précédentes, caractérisé en ce que les ouvertures de la maille en feuille métallique du ruban (13) occupent 15%-30% de la surface totale du noyau tubulaire formé (15).

13. Procédé selon l'une quelconque des revendications précédentes, caractérisé en ce que les ouvertures de la maille en feuille métallique du ruban (13) ont chacune une section d'une taille comprise entre 0,5 mm et 3,0 mm.

14. Procédé selon l'une quelconque des revendications précédentes, caractérisé en ce que la matière plastique des couches interne et externe (24, 28; 25) est le polyéthylène, le polyéthylène réticulé, le polypropylène, le polytétrafluoroéthylène, le chlorure de polyvinyle chloré, le perfluoroalcoxyéthylène, l'éthylène-propylène fluoré ou le difluorure de polyvinylidène.
